# EUROPÄISCHE PATENTANMELDUNG

(11) **EP 3 290 267 A1**
(43) Veröffentlichungstag der Anmeldung: **07.03.2018**
(21) Anmeldenummer: 17181246.4
(22) Anmeldetag: 13.07.2017
(51) Int. Cl.: B60P 3/34

(54) **MOBILER UMBAUTER RAUM UND RAUMERWEITERUNGSSYSTEM FÜR EINEN MOBILEN UMBAUTEN RAUM**

(30) Priorität: 05.09.2016 DE 202016005364 U; 28.09.2016 DE 102016118322
(71) Anmelder: König, Reinhold, 72818 Trochtelfingen (DE)
(72) Erfinder: König, Reinhold, 72818 Trochtelfingen (DE)
(74) Vertreter: Kohler Schmid Möbus Patentanwälte

(57) **Zusammenfassung**

Die Erfindung betrifft einen mobilen umbauten Raum (10, 20), vorzugsweise ein Wohnwagen, Verkaufs- und/oder Ausstellungsanhänger, Wohnmobil oder Container, mit einem einen Basisraum definierenden Grundmodul (2, 22), wobei das Grundmodul (2, 22) eine Bodenplatte (2b, 22b), Seitenwände (2c, 22c) und ein Dach (2a, 22a) umfasst, wobei der mobile umbaute Raum (10, 20) wenigstens eine Klappwand (3, 23) aufweist, wobei die Klappwand (3, 23) eine Zusatzbodenplatte ausbildend umklappbar ist, und wobei der mobile umbaute Raum (10, 20) wenigstens ein ein Zusatzdach (1a) und Zusatzseitenwände (1c) umfassendes Zusatzraumelement (1, 21) aufweist, das in einer Raumerweiterungsstellung mit der umgeklappten Klappwand (3, 23) bzw. der Zusatzbodenplatte einen den Basisraum erweiternden oder zusätzlichen Zusatzraum (28) bildet. Des Weiteren betrifft die Erfindung ein Raumerweiterungssystem für einen mobilen umbauten Raum.

## Beschreibung

Die Erfindung geht aus von einem mobilen umbauten Raum, vorzugsweise ein Wohnwagen, Verkaufs- und/oder Ausstellungsanhänger, Wohnmobil oder Container, mit einem einen Basisraum definierenden Grundmodul, wobei das Grundmodul eine Bodenplatte, Seitenwände und ein Dach umfasst. Solche mobilen umbauten Räume sind bereits vielfältig sowohl im gewerblichen als auch im Freizeitbereich im Einsatz.

Problematisch an den derzeit bekannten mobilen umbauten Räumen ist, dass sie, um im üblichen Straßenverkehr transportiert werden zu können, nur verhältnismäßig kleine Außenabmessungen aufweisen. Dadurch ist das zu nutzende Innenvolumen des mobilen umbauten Raums begrenzt. Wird der mobile umbaute Raum beispielsweise als Verkaufsraum oder als Ausstellungsraum genutzt, so bietet dieser nur eine verhältnismäßig geringe Verkaufs- bzw. Ausstellungsfläche in seinem Innenraum an.

Aufgabe der vorliegenden Erfindung ist es daher, einen mobilen umbauten Raum anzubieten, der im normalen Straßenverkehr transportierbar ist, gleichzeitig jedoch zumindest temporär ein vergrößertes Innenvolumen bietet.

Gelöst wird die Aufgabe durch einen mobilen umbauten Raum, vorzugsweise ein Wohnwagen, Verkaufs- und/oder Ausstellungsanhänger, Wohnmobil oder Container, mit einem einen Basisraum definierenden Grundmodul, wobei das Grundmodul eine Bodenplatte, Seitenwände und ein Dach umfasst,
- wobei der mobile umbaute Raum wenigstens eine Klappwand aufweist, wobei die Klappwand eine Zusatzbodenplatte ausbildend umklappbar ist, und
- wobei der mobile umbaute Raum wenigstens ein ein Zusatzdach und Zusatzseitenwände umfassendes Zusatzraumelement aufweist, das in einer Raumerweiterungsstellung mit der umgeklappten Klappwand bzw. der Zusatzbodenplatte einen den Basisraum erweiternden oder zusätzlichen Zusatzraum bildet.

Erfindungsgemäß kann somit der mobile umbaute Raum zunächst auf herkömmliche Weise im Straßenverkehr transportiert werden. Wird der mobile umbaute Raum abgestellt, kann die Klappwand umgeklappt werden und so der Boden des mobilen umbauten Raums zunächst erweitert werden. Auf die Zusatzbodenplatte kann dann das Zusatzraumelement angeordnet, insbesondere aufgeschoben, werden. Dadurch wird insgesamt das Innenvolumen des mobilen umbauten Raums um einen durch die Zusatzbodenplatte und das Zusatzraumelement gebildeten Zusatzraum erweitert.

Soll der mobile umbaute Raum an einen anderen Ort weitertransportiert werden, so kann das Zusatzraumelement zurückversetzt, insbesondere zurückgeschoben, werden und die Klappwand wieder zurückgeklappt werden.

Wird der erfindungsgemäße mobile umbaute Raum beispielsweise im Freizeitbereich, insbesondere beim Camping, eingesetzt, benötigt man somit kein Vorzelt mehr. Der aufwändige Aufbau des Vorzelts entfällt. Feuchtigkeit kann nicht mehr vom Boden aufsteigen, wenn die Klappwand bzw. die Zusatzbodenplatte feuchtigkeitsfest ausgebildet ist. Auch störender Außenlärm kann wirkungsvoll isoliert werden.

Bei Nutzung z. B. im Verkauf kann auf Messen und Ausstellungen ein großer überdachter Raum für Verkaufsgespräche genutzt werden. Das vergrößerte Innenvolumen kann bei entsprechender Ausstattung auch als Verkaufsladen genutzt werden, in den Kunden hereinkommen, sich Waren anschauen und diese kaufen können. Die Einrichtung kann somit individuell an die jeweilige Nutzung angepasst werden. Sie kann auch schon vorab bestückt bzw. möbliert werden.

Besonders vorteilhaft ist, dass durch die sich ergebende stabile Ausführung Wetter keinen Einfluss mehr auf einen Verkauf hat.

Ist der mobile umbaute Raum als Container ausgebildet, kann die vergrößerte Bodenfläche bzw. das vergrößerte Innenvolumen als Lager genutzt werden. Da der umbaute Raum mobil ist, kann die vergrößerte Bodenfläche sogar an den Ort der geplanten Nutzung gebracht werden.

Besonders vorteilhaft ist es, wenn an der Klappwand wenigstens ein insbesondere ausklappbares, vorzugsweise höheneinstellbares, Stützelement angeordnet ist. Insbesondere können mehrere ausklappbare, vorzugsweise höheneinstellbare, Stützelemente vorgesehen werden.

Mit derartigen Stützelementen kann die Klappwand in umgeklapptem Zustand gegen den Boden, auf dem der mobile umbaute Raum aufgestellt ist, abgestützt werden. Ist das Stützelement höheneinstellbar, so können Unebenheiten des Bodens auf besonders einfache Weise ausgeglichen werden. Besonders vorteilhaft ist das Stützelement ausklappbar an der Klappwand angeordnet. Dann kann, insbesondere für einen Transport des mobilen umbauten Raums, das Stützelement an die Klappwand angeklappt werden. Somit kann beispielsweise die Breite und/oder die Länge des mobilen umbauten Raums während des Transports verringert werden. Ergänzend oder alternativ kann auch vorgesehen sein, dass an der Bodenplatte und/oder am Grundmodul wenigstens ein ausfahrbares bzw. ausziehbares, vorzugsweise höheneinstellbares, Stützelement angeordnet ist.

Die Klappwand kann relativ zur Bodenplatte schwenkbar angeordnet, insbesondere mit dieser schwenkbar verbunden, sein. Insbesondere kann die Klappwand mittels Gasfedern, Hydraulikzylindern, Gewindespindeln und/oder Drahtseilen umklappbar sein. Dann kann die Klappwand auf besonders einfache Weise gedämpft umgeklappt werden und/oder, beispielsweise bei Verwendung von motorisch angetriebenen Hydraulikzylindern oder Drahtseilen, selbst bei erhöhtem Gewicht wieder auf besonders einfache Weise zurückgeklappt werden.

Ein besonderer Vorteil ergibt sich, wenn die Klappwand in ihrem umgeklappten Zustand bündig zur Bodenhöhe der Bodenplatte angeordnet ist. Dadurch kann die Grundfläche des mobilen umbauten Raums in der Raumerweiterungsstellung stufenfrei um die Größe der Klappwand bzw. der Zusatzbodenplatte erweitert werden.

Besonders reibungsarm und damit mit besonders geringem Kraftaufwand lässt sich das Zusatzraumelement auf die Klappwand in ihrem umgeklappten Zustand, d. h. auf die Zusatzbodenplatte, aufschieben, wenn das Zusatzraumelement insbesondere mittels Laufrollen und/oder Laufschienen auf die Klappwand in ihrem umgeklappten Zustand aufschiebbar ist. Dazu können das Zusatzraumelement und/oder die Klappwand Laufrollen und/oder, vorzugsweise zu den Laufrollen komplementär gebildete, Laufschienen aufweisen. Auch können Laufrollen und/oder Laufschienen am Dach angeordnet sein, sodass sich eine Dachfläche des Zusatzraumelements während des Aufschiebens bzw. des Zuschiebens am Dach des Grundmoduls abstützen kann. Insbesondere kann dafür vorgesehen sein, dass das Zusatzraumelement, insbesondere für einen Transportzustand des mobilen umbauten Raums, das Grundmodul zumindest teilweise einhüllend anordenbar ist, insbesondere auf das Grundmodul und/oder auf die Seitenwände und/oder auf das Dach, vorzugsweise mittels Laufrollen und/oder Laufschienen, aufschiebbar ist, oder in dem Grundmodul anordenbar ist. Das Zusatzraumelement kann elektrisch oder mechanisch, vorzugsweise motorisch, angetrieben sein.

Besonders vorteilhaft ist es, wenn das Zusatzraumelement in seiner Raumerweiterungsstellung mittels wenigstens eines Winkelelements, an dem vorzugsweise ein Dichtelement anliegt, zum Grundmodul hin abgedichtet ist. Somit lassen sich auf besonders einfache Weise eine gute thermische Isolierung sowie ein Schutz vor eindringender Feuchtigkeit, insbesondere zu den Seitenwänden und dem Dach hin, erreichen.

Es kann auch vorgesehen sein, dass wenigstens eine Seitenwand, das Dach, die Bodenplatte und/oder wenigstens ein Teil des Zusatzraumelements aus einem Sandwich-Material, vorzugsweise einem aus außenliegenden Blech- und/oder Kunststoffschichten und einer innenliegenden Schaummaterialschicht gebildetes Sandwich-Material, ausgebildet ist. Sandwich-Materialien können eine hohe Stabilität bei gleichzeitig geringem Flächengewicht aufweisen.

Eine besonders bevorzugte Ausführungsform der Erfindung ergibt sich, wenn wenigstens zwei, vorzugsweise sich gegenüberliegende, Seitenwände als Klappwände ausgebildet sind, auf denen jeweils ein Zusatzraumelement in ihrem jeweiligen umgeklappten Zustand anordenbar, insbesondere aufschiebbar, ist. Ein solcher mobiler umbauter Raum kann somit auf wenigstens zwei verschiedenen Seiten vergrößert werden. Somit lässt sich eine noch weitergehende Vergrößerung des nutzbaren Innenvolumens erreichen. Insbesondere kann der durch den mobilen umbauten Raum und den Zusatzraum gebildete Gesamtraum ein wenigstens doppelt so großes, vorzugsweise ein dreimal so großes, Volumen wie der mobile umbaute Raum allein aufweisen.

Auch kann vorgesehen sein, dass wenigstens ein Zusatzraumelement eine Breite von 1,5 m bis 2,55 m aufweist. Auch kann das Grundmodul eine Breite von 1,5 m bis 2,55 m und/oder eine Länge von 2,5 m bis 18 m aufweisen. Somit kann einerseits das Innenvolumen des mobilen umbauten Raums hinreichend vergrößert werden. Andererseits kann auch gewährleistet bleiben, dass der mobile umbaute Raum im Straßenverkehr transportiert werden kann. Insbesondere kann eine Konformität mit Straßenverkehrsnormen, die eine Zulassung eines mobilen umbauten Raums beispielsweise bis zu einer Breite von 2,55 m zulassen, erreicht werden.

In den Rahmen der Erfindung fällt des Weiteren ein Raumerweiterungssystem für einen mobilen umbauten Raum mit einem einen Basisraum definierenden Grundmodul, wobei das Grundmodul eine Bodenplatte, Seitenwände und ein Dach umfasst,
- wobei das Raumerweiterungssystem eine Klappwand zur Montage an dem mobilen umbauten Raum aufweist, wobei die Klappwand eine Zusatzbodenplatte ausbildend umklappbar montierbar ist, und
- wobei das Raumerweiterungssystem ein ein Zusatzdach und Zusatzseitenwände umfassendes Zusatzraumelement aufweist, das nach seiner Montage am mobilen umbauten Raum in einer Raumerweiterungsstellung mit der umgeklappten Klappwand bzw. der Zusatzbodenplatte einen den Basisraum erweiternden oder zusätzlichen Zusatzraum bildet.

Mit einem solchen Raumerweiterungssystem lässt sich auf besonders einfache Weise ein im Stand der Technik bekannter mobiler umbauter Raum zu einem mobilen umbauten Raum gemäß der Erfindung nachrüsten bzw. umbauen. Somit können auf besonders einfache Weise die vorangehend genannten Vorteile auch für einen bestehenden mobilen umbauten Raum nutzbar gemacht werden.

Weitere Vorteile der Erfindung ergeben sich aus der nachfolgenden Beschreibung von Ausführungsbeispielen der erfindungsgemäßen Vorrichtungen, anhand der Figuren der Zeichnung, die erfindungswesentliche Einzelheiten zeigen, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und werden in der nachfolgenden Beschreibung näher erläutert.

Es zeigen:
- Fig. 1a - Fig. 1c: ein erstes Ausführungsbeispiel eines mobilen umbauten Raums in unterschiedlichen Nutzungszuständen;
- Fig. 2a - Fig. 2e: ein zweites Ausführungsbeispiel eines mobilen umbauten Raum in unterschiedlichen Nutzungszuständen;
- Fig. 3a - Fig. 3c: Detailansichten zur dachseitigen Konstruktion eines mobilen umbauten Raums.

In den Figuren sind zur Vereinfachung der Beschreibung sich jeweils entsprechende Elemente mit jeweils gleichen Bezugszeichen versehen.

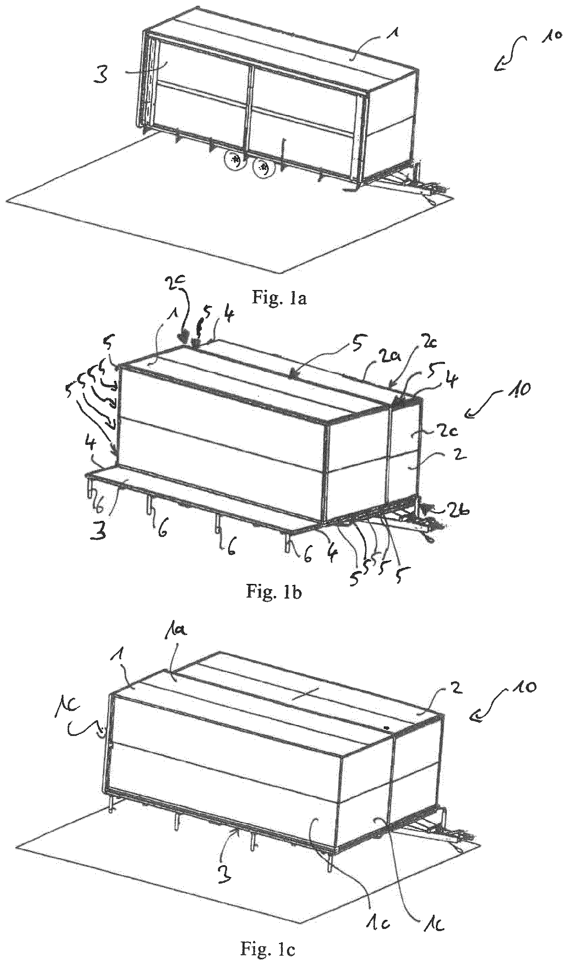

Die Fig. 1a bis Fig. 1c zeigen einen als Anhänger ausgebildeten ersten mobilen umbauten Raum 10 in verschiedenen Nutzungszuständen. Insbesondere ist ein Zusatzraumelement 1 zu erkennen.

In Fig. 1a ist das Zusatzraumelement 1 vollständig auf ein in Fig. 1b und Fig. 1c zu sehendes Grundmodul 2 des mobilen umbauten Raums 10 aufgeschoben und hüllt dieses an drei Seiten ein. Das Grundmodul 2 weist einen Aufbau aus Dach 2a (Fig. 1b), Bodenplatte 2b (Fig. 1b) und Seitenwänden 2c (Fig. 1b) auf. Mit Ausnahme des Aufbaus ist das Grundmodul aus Blech und verzinkten Vierkantrohren gebildet. Der Aufbau, d. h. die Wandelemente, ist aus Sandwich-Material mit außenliegenden Kunststoffschichten und innenliegender Schaummaterialschicht gebildet.

Das Grundmodul 2 weist eine Breite im Bereich von 1,5 m bis 2,55 m und eine Länge im Bereich von 2,5 m bis 18 m auf. Das Zusatzraumelement 1 weist eine dem Grundmodul 2 in etwa entsprechende Breite und Länge, in diesem Fall daher ebenfalls eine Breite im Bereich von 1,5 m bis 2,55 m und eine Länge im Bereich von 2,5 m bis 18 m auf.

Eine Klappwand 3 des mobilen umbauten Raums 10 ist in der Fig. 1a hochgeklappt. Somit befindet sich der mobile umbaute Raum 10 gemäß der Fig. 1a in einem Transportzustand. In diesem Zustand kann der mobile umbaute Raum 10 wie gewohnt, beispielsweise im Straßenverkehr, bewegt werden.

In Fig. 1b ist dargestellt, dass das Zusatzraumelement 1 bereits teilweise auf die nunmehr bezüglich der Bodenplatte 2b umgeklappte Klappwand 3 aufgeschoben ist. Die Klappwand 3 bildet somit im umgeklappten Zustand eine Zusatzbodenplatte, auf die das Zusatzraumelement 1 aufschiebbar ist.

Zu erkennen sind ferner das Dach 2a sowie die Seitenwände 2c des Grundmoduls 2. Die Bodenplatte 2b des Grundmoduls 2 befindet sich unterseitig des mobilen umbauten Raums 10.

Stützelemente 6, die an der umgeklappten Klappwand 3 angeordnet sind, stützen das Zusatzraumelement 1 sowie die umgeklappte Klappwand 3 nach unten hin ab und stabilisieren somit den gesamten Aufbau des mobilen umbauten Raums 10.

Des Weiteren sind Laufschienen 4 an der Klappwand 3, insbesondere an deren kurzen Seiten, angeordnet, auf denen Laufrollen 5 des Zusatzraumelements 1 rollen. Durch die Laufrollen 5 in Verbindung mit den Laufschienen 4 kann somit das Zusatzraumelement 1 mit geringem Kraftaufwand auf die Klappwand 3 in ihrem umgeklappten Zustand aufgeschoben bzw. von dieser weggeschoben werden. Alternativ ist es denkbar, die Laufschienen 4 ausziehbar an der Bodenplatte 2b anzuordnen und diese auszuziehen, ehe das Zusatzraumelement 1 von der Transportstellung (Fig. 1a) in die Raumerweiterungsstellung (Fig. 1c) verlagert wird.

In der Fig. 1c ist der Raumerweiterungszustand dargestellt, bei dem das Zusatzraumelement 1 mit seinen Zusatzseitenwänden 1c und seinem Zusatzdach 1a vollständig vom Grundmodul 2 weg auf die umgeklappte Klappwand 3 aufgeschoben ist.

Der Fig. 1c ist im Vergleich zur Fig. 1a zu entnehmen, dass durch das Aufschieben des Zusatzelements 1 das nutzbare Innenvolumen des mobilen umbauten Raums wesentlich vergrößert ist. Somit steht zumindest temporär, insbesondere wenn der mobile umbaute Raum 10 an einem vorgegebenen Ort abgestellt ist, ein größerer Raum, insbesondere mit ebenfalls vergrößertem Bodenbereich, zur Nutzung zur Verfügung.

Der durch die Größe der Bodenplatte 2b des Grundmoduls 2 definierte Basisraum kann seitlich durch eine Wand begrenzt sein, die Fensterelemente und/oder Türelemente aufweisen kann, sodass der Innenraum der Anordnung gemäß Fig. 1c durch diese (Zwischen-)Wand unterteilt ist. Eine solche (Zwischen-)Wand kann auch fehlen.

Anhand eines alternativen Ausführungsbeispiels der Erfindung werden unterschiedliche Schritte zur Nutzung des mobilen umbauten Raums gemäß der Erfindung im Detail erläutert.

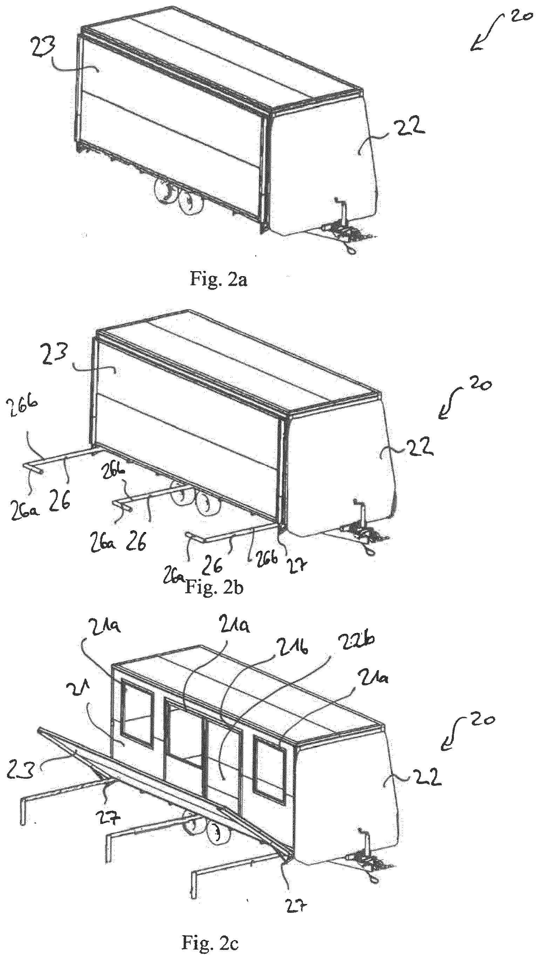

Dazu zeigt Fig. 2a wiederum einen mobilen umbauten Raum 20, der im Wesentlichen dem mobilen umbauten Raum der Fig. 1a bis Fig. 1c entspricht.

Um das Innenvolumen des mobilen umbauten Raums 20 zu vergrößern, werden in einem ersten Schritt gemäß der Fig. 2b Stützelemente 26, die unterseitig an einem Grundmodul 22 bzw. an einer Bodenplatte 22b (Fig. 2c) des Grundmoduls 22 angeordnet sind, seitlich herausgezogen.

Dazu sind die Stützelemente 26 als ausziehbare Stangen ausgebildet. Die Stützelemente 26 sind winklig ausgebildet und können um die Längsachse entlang ihrer Tragschenkel 26b rotiert werden. Somit kann der jeweils andere Schenkel des Stützelements 26, d. h. Stützschenkel 26a, durch Verdrehen des Stützelements 26 auf einem Boden abgestellt werden.

In diesem Ausführungsbeispiel sind die Stützschenkel 26a längeneinstellbar ausgebildet. Ist der Boden, auf dem der mobile umbaute Raum 20 abgestellt ist, uneben, können die Längen der Stützschenkel 26a entsprechend angepasst werden. Die Tragschenkel 26b der Stützelemente 26 können somit horizontal ausgerichtet bzw. abgestützt werden.

Wie der Fig. 2c zu entnehmen ist, wird anschließend die Klappwand 23 mittels seitlich und unterseitig am Grundmodul 22 angeordneten Dämpfungselementen, in diesem Fall Gasfedern 27, gedämpft umgeklappt. Des Weiteren sind Scharniere zur ausklappbaren Befestigung der Klappwand 23 am Grundmodul 22 sowie Halter am Grundmodul zur Halterung der Gasfedern 27 angeordnet.

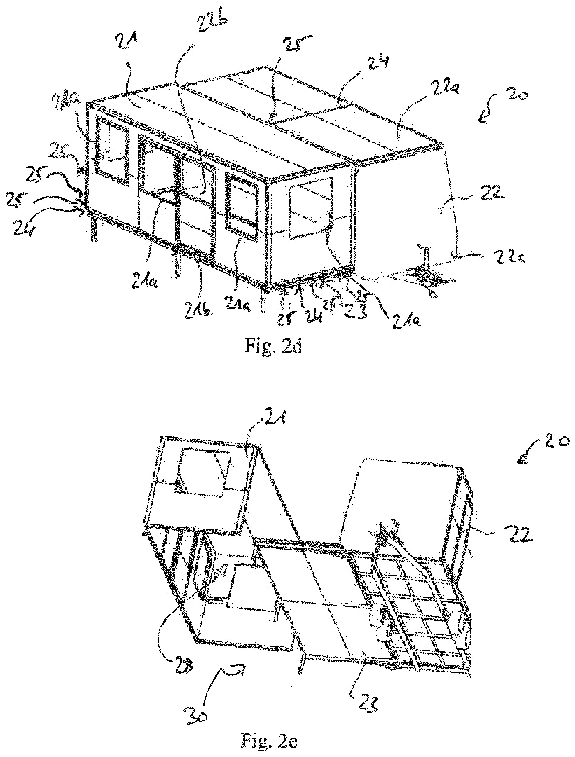

Somit bildet die Klappwand 23 im umgeklappten Zustand (Fig. 2d) eine Zusatzbodenplatte aus. Die Zusatzbodenplatte bzw. die Klappwand 23 liegt im umgeklappten Zustand auf den Tragschenkeln 26b auf und schließt bündig, d. h. stufenlos, zur Bodenhöhe der Bodenplatte 22b des Grundmoduls 22 ab. Somit wird durch die Bodenplatte 22b und die Klappwand 23 in ihrem umgeklappten Zustand eine durchgehende, erweiterte Bodenplatte des nunmehr erweiterten mobilen umbauten Raums 20 gebildet.

Die Fig. 2d zeigt ferner Laufschienen 24, die einerseits auf einem Dach 22a des Grundmoduls 22 als auch an den seitlichen Rändern der Klappwand 23 bzw. der Zusatzbodenplatte sowie der Bodenplatte 22b des Grundmoduls 22 angeordnet sind. Auf diesen Laufschienen 24 rollen jeweils wiederum Laufrollen 25 (in Fig. 2d lediglich angedeutet), die am Zusatzraumelement 21 angeordnet sind, ausgehend vom Grundmodul 22 bis auf die umgeklappte Klappwand 23. Somit kann das Zusatzraumelement 21 bis in einen vollständig aufgeschobenen Zustand bzw. bis zu seiner Raumerweiterungsstellung gemäß der Fig. 2d auf die Klappwand 23 aufgeschoben werden.

Die Fig. 2e zeigt nun noch eine teilexplodierte Ansicht des mobilen umbauten Raums 20.

Die Klappwand 23 und das Zusatzraumelement 21 bilden ein Raumerweiterungssystem 30 für den mobilen umbauten Raum 20. Ein solches Raumerweiterungssystem 30 kann insbesondere auch verwendet werden, um einen bekannten mobilen umbauten Raum in einen mobilen umbauten Raum gemäß der Erfindung bausatzartig umzugestalten.

Zu erkennen ist insbesondere, dass das Raumerweiterungssystem 30 die Klappwand 23 aufweist, wobei die Klappwand 23 zur Montage an dem mobilen umbauten Raum 20, insbesondere am Grundmodul 22, vorgesehen ist. Ferner weist das Raumerweiterungssystem 30 das Zusatzraumelement 21 auf, das wie vorangehend beschrieben auf die Klappwand 23 in ihrem umgeklappten Zustand nach ihrer Montage aufschiebbar ist. Der Fig. 2e ist insbesondere zu entnehmen, dass das Zusatzraumelement 21 mit der Klappwand 23 bzw. der Zusatzbodenplatte in seinem aufgeschobenen Zustand zumindest bis auf eine Seite hin einen umschlossenen Zusatzraum 28 bildet.

Um beispielsweise den mobilen umbauten Raum 20 weitertransportieren zu können, können die vorangehend beschriebenen Schritte in umgekehrter Reihenfolge ausgeführt werden, um somit den mobilen umbauten Raum 20 wieder in seinen Transportzustand zu bringen.

Im Transportzustand schützt die Klappwand 23 des mobilen umbauten Raums 20 im Übrigen auch in den Fig. 2c und Fig. 2d bezeichnete Fensterelemente 21a und ein Türelement 21b des Zusatzraumelements 21. Auch weist das Grundmodul 22 eine Seitenwand 22c (Fig. 2d) auf, die eines der Fensterelemente 21a im Transportzustand zusätzlich verdeckt bzw. schützt.

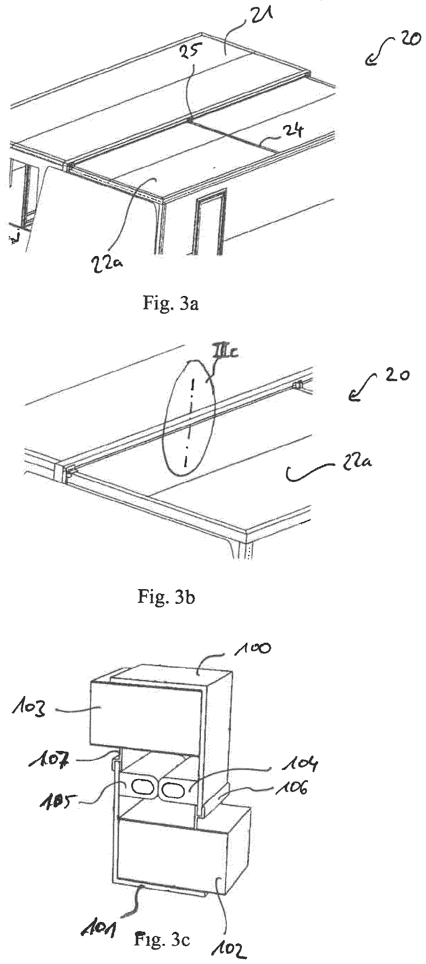

Anhand der Fig. 3a bis Fig. 3c werden im Folgenden Details der Dachkonstruktion des mobilen umbauten Raums 20 näher erläutert.

Zunächst ist der Fig. 3a zu entnehmen, dass auf dem Dach 22a des mobilen umbauten Raums 20 eine Laufschiene 24 in etwa mittig zum Dach 22a quer zur üblichen Fahrtrichtung verlaufend angeordnet ist. Auf dieser Laufschiene 24 läuft eine Laufrolle 25, die zur Abstützung des Zusatzraumelements 21, insbesondere beim Aufschieben, dient.

Um ein Eindringen von Feuchtigkeit zu vermeiden, ist eine besondere Dichtungsanordnung vorgesehen, die im Folgenden näher beschrieben wird. Dazu zeigt Fig. 3c einen Ausschnitt in perspektivischer Darstellung aus einem Bereich IIIc der Fig. 3b des Dachs 22a. Im Bereich IIIc greifen das Zusatzraumelement 21 und das Dach 22a ineinander, so dass dieser Bereich besonders vor Umwelteinflüssen wie dem Eindringen von Feuchtigkeit zu schützen ist.

Zu erkennen sind zunächst zwei Dachplatten 102, 103. Die Dachplatte 102 ist dabei Teil des Dachs 22a. Die Dachplatte 103 ist Teil des Zusatzraumelements 21. Beide Dachplatten sind aus Sandwich-Material gebildet. Das Sandwich-Material weist dabei außenliegende Blechschichten auf, zwischen denen innenliegend jeweils eine Schaummaterialschicht angeordnet ist.

An den Dachplatten 102, 103 greifen jeweils Winkelelemente 100, 101 an. Die Winkelelemente 100, 101 sind aus Aluminium gefertigt. An den Winkelelementen 100, 101 sind ferner Dichtelemente 104, 105 bzw. 106, 107 angeordnet. Diese Dichtelemente 104, 105, 106, 107 sind aus Dichtgummi gebildet. Die Dichtelemente 104, 105 sind horizontal ausgerichtet und in zueinander entsprechender Höhe bzw. bei vollständig aufgeschobenem Zustand des Zusatzraumelements 21 zueinander auf Stoß angeordnet. Die Dichtelemente 106, 107 sind dagegen vertikal ausgerichtet und dichten mit Dichtlippen gegen eine der jeweils angrenzenden Dachplatten 102, 103 ab.

Somit kann das Zusatzraumelement 21 vom Fahrzustand bis zum aufgeschobenen Zustand verschoben werden. Im aufgeschobenen Zustand kontaktieren die Dichtelemente 104, 105 miteinander und dichten somit automatisch den Bereich zum Zusatzraumelement 21 im aufgeschobenen Zustand ab. Somit wird ein Eindringen von beispielsweise Feuchtigkeit entlang von Kanten des Zusatzraumelements 21 bzw. durch mit diesen verbundenen Fugen vermieden.

### Bezugszeichenliste:

- 1: Zusatzraumelement
- 1a: Zusatzdach
- 1c: Zusatzseitenwand
- 2: Grundmodul
- 2a: Dach
- 2b: Bodenplatte
- 2c: Seitenwand
- 3: Klappwand
- 4: Laufschiene
- 5: Laufrolle
- 6: Stützelement
- 10: Mobiler umbauter Raum
- 20: Mobiler umbauter Raum
- 21: Zusatzraumelement
- 21a: Fensterelement
- 21b: Türelement
- 22: Grundmodul
- 22a: Dach
- 22b: Bodenplatte
- 22c: Seitenwand
- 23: Klappwand
- 24: Laufschiene
- 25: Laufrolle
- 26: Stützelement
- 26a: Stützschenkel
- 26b: Tragschenkel
- 28: Zusatzraum
- 30: Raumerweiterungssystem
- 100: Winkelelement
- 101: Winkelelement
- 102: Dachplatte
- 103: Dachplatte
- 104: Dichtelement
- 105: Dichtelement
- 106: Dichtelement
- 107: Dichtelement

## Patentansprüche

1. Mobiler umbauter Raum (10, 20), vorzugsweise ein Wohnwagen, Verkaufs- und/oder Ausstellungsanhänger, Wohnmobil oder Container, mit einem einen Basisraum definierenden Grundmodul (2, 22), wobei das Grundmodul (2, 22) eine Bodenplatte (2b, 22b), Seitenwände (2c, 22c) und ein Dach (2a, 22a) umfasst,
**dadurch gekennzeichnet,**
- **dass** der mobile umbaute Raum (10, 20) wenigstens eine Klappwand (3, 23) aufweist, wobei die Klappwand (3, 23) eine Zusatzbodenplatte ausbildend umklappbar ist, und
- **dass** der mobile umbaute Raum (10, 20) wenigstens ein ein Zusatzdach (1a) und Zusatzseitenwände (1c) umfassendes Zusatzraumelement (1, 21) aufweist, das in einer Raumerweiterungsstellung mit der umgeklappten Klappwand (3, 23) bzw. der Zusatzbodenplatte einen den Basisraum erweiternden oder zusätzlichen Zusatzraum (28) bildet.

2. Mobiler umbauter Raum nach Anspruch 1, **dadurch gekennzeichnet, dass** an der Klappwand (3, 23) wenigstens ein insbesondere ausklappbares, vorzugsweise höheneinstellbares, Stützelement (6, 26) angeordnet ist.

3. Mobiler umbauter Raum nach einem der vorhergehenden Ansprüche, **dadurch gekennzeichnet, dass** an der Bodenplatte (2b, 22b) und/oder am Grundmodul (2, 22) wenigstens ein ausfahrbares, vorzugsweise höheneinstellbares, Stützelement (6, 26) angeordnet ist.

4. Mobiler umbauter Raum nach einem der vorhergehenden Ansprüche, **dadurch gekennzeichnet, dass** die Klappwand (3, 23) mittels Gasfedern (27), Hydraulikzylindern, Gewindespindeln und/oder Drahtseilen umklappbar ist.

5. Mobiler umbauter Raum nach einem der vorhergehenden Ansprüche, **dadurch gekennzeichnet, dass** die Klappwand (3, 23) in ihrem umgeklappten Zustand bündig zur Bodenhöhe der Bodenplatte (2b, 22b) angeordnet ist.

6. Mobiler umbauter Raum nach einem der vorhergehenden Ansprüche, **dadurch gekennzeichnet, dass** das Zusatzraumelement (1, 21) insbesondere mittels Laufrollen (5, 25) und/oder Laufschienen (4, 24) auf die Klappwand (3, 23) in ihrem umgeklappten Zustand aufschiebbar ist.

7. Mobiler umbauter Raum nach einem der vorhergehenden Ansprüche, **dadurch gekennzeichnet, dass** das Zusatzraumelement (1, 21), insbesondere für einen Transportzustand des mobilen umbauten Raums (10, 20), das Grundmodul (2, 22) zumindest teilweise einhüllend anordenbar ist, insbesondere auf das Grundmodul (2, 22) und/oder auf die Seitenwände (2c, 22c) und/oder auf das Dach (2a, 22a), vorzugsweise mittels Laufrollen (5, 25) und/oder Laufschienen (4, 24), aufschiebbar ist, oder in dem Grundmodul (2, 22) anordenbar ist.

8. Mobiler umbauter Raum nach einem der vorhergehenden Ansprüche, **dadurch gekennzeichnet, dass** das Zusatzraumelement (1, 21) in seiner Raumerweiterungsstellung mittels wenigstens eines Winkelelements (100, 101), an dem vorzugsweise ein Dichtelement (104, 105, 106, 107) anliegt, zum Grundmodul (2, 22) hin abgedichtet ist.

9. Mobiler umbauter Raum nach einem der vorhergehenden Ansprüche, **dadurch gekennzeichnet, dass** wenigstens eine Seitenwand (2c, 22c), das Dach (2a, 22a), die Bodenplatte (2b, 22b) und/oder wenigstens ein Teil des Zusatzraumelements (1, 21) aus einem Sandwich-Material, vorzugsweise einem aus außenliegenden Blech- und/oder Kunststoffschichten und einer innenliegenden Schaummaterialschicht gebildetes Sandwich-Material, ausgebildet ist.

10. Mobiler umbauter Raum nach einem der vorhergehenden Ansprüche, **dadurch gekennzeichnet, dass** wenigstens zwei, vorzugsweise sich gegenüberliegende, Seitenwände (2c, 22c) als Klappwände (3, 23) ausgebildet sind, auf denen jeweils ein Zusatzraumelement (1, 21) in ihrem jeweiligen umgeklappten Zustand anordenbar, insbesondere aufschiebbar, ist.

11. Mobiler umbauter Raum nach einem der vorhergehenden Ansprüche, **dadurch gekennzeichnet, dass** wenigstens ein Zusatzraumelement (1, 21) eine Breite von 1,5 m bis 2,55 m aufweist.

12. Mobiler umbauter Raum nach einem der vorhergehenden Ansprüche, **dadurch gekennzeichnet, dass** das Grundmodul (2, 22) eine Breite von 1,5 m bis 2,55 m und/oder eine Länge von 2,5 m bis 18 m aufweist.

13. Raumerweiterungssystem (30) für einen mobilen umbauten Raum (10, 20) mit einem einen Basisraum definierenden Grundmodul (2, 22), wobei das Grundmodul eine Bodenplatte (2b, 22b), Seitenwände (2c, 22c) und ein Dach (2a, 22a) umfasst,
**dadurch gekennzeichnet,**
- **dass** das Raumerweiterungssystem (30) eine Klappwand (3, 23) zur Montage an dem mobilen umbauten Raum (10, 20) aufweist, wobei die Klappwand (3, 23) eine Zusatzbodenplatte ausbildend umklappbar montierbar ist, und
- **dass** das Raumerweiterungssystem (30) ein ein Zusatzdach (1a) und Zusatzseitenwände (1c) umfassendes Zusatzraumelement (1, 21) aufweist, das nach seiner Montage am mobilen umbauten Raum (10, 20) in einer Raumerweiterungsstellung mit der umgeklappten Klappwand (3, 23) bzw. der Zusatzbodenplatte einen den Basisraum erweiternden oder zusätzlichen Zusatzraum (28) bildet.
